(19) Europäisches Patentamt
European Patent Office
Office européen des brevets

(11) EP 2 549 876 B1

(12) EUROPEAN PATENT SPECIFICATION

(45) Date of publication and mention
of the grant of the patent:
**16.03.2016 Bulletin 2016/11**

(51) Int Cl.:
*A01N 43/653* (2006.01)     *A01N 47/04* (2006.01)
*A01P 3/00* (2006.01)

(21) Application number: **11715049.0**

(22) Date of filing: **22.03.2011**

(86) International application number:
**PCT/IL2011/000270**

(87) International publication number:
**WO 2011/117868 (29.09.2011 Gazette 2011/39)**

(54) **SYNERGISTIC FUNGICIDAL COMBINATION**

SYNERGISTISCHE FUNGIZIDE KOMBINATION

COMBINAISON FONGICIDE SYNERGÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2010 US 316188 P**
**22.03.2010 US 316024 P**

(43) Date of publication of application:
**30.01.2013 Bulletin 2013/05**

(73) Proprietor: **ADAMA Irvita N.V.**
**Curaçao (CW)**

(72) Inventors:
• **SHEFFER, Noam**
**46300 Herzliya (IL)**
• **HUART, Gerald**
**91460 Marcoussis (FR)**
• **CAMUS, Daniel**
**91120 Palaiseau (FR)**

(74) Representative: **Modiano, Micaela Nadia et al**
**Modiano & Partners (DE)**
**Thierschstrasse 11**
**80538 München (DE)**

(56) References cited:
**WO-A1-03/007716     WO-A1-2009/071389**

**Description**

**BACKGROUND**

The present invention relates generally to a synergistically effective combination comprising, as active components, folpet (I) and epoxiconazole (II), to a method for controlling phytopathogenic fungi using a combination of folpet (I) and epoxiconazole (II), and also to compositions comprising this combination in admixture

The phthalimide derivative *N*-(trichloromethanesulfenyl)phthalimide, folpet, is a well known protective leaf-fungicide disclosed in U.S. Pat. Nos. 2,553,770; 2,553,771 and 2,553,776. Folpet was first registered as pesticide in the U.S. in 1984. It is used, *inter alia*, to control grapevine downy mildew, cherry leaf spot, rose mildew, rose black spot, and apple scab, and is used on berries, flowers, ornamentals, fruits and vegetables, and for seed- and plant-bed treatment. Folpet is also used as a fungicide in paints and plastics, and for treatment of internal and external structural surfaces of buildings.

The triazole derivative (2RS,3SR)-1-[3-(2-chlorophenyl)-2,3-epoxy-2-(4-fluorophenyl)propyl]-1H-1,2,4-triazole, epoxiconazole, its synthesis and its antifungal properties have been disclosed in U.S. Pat. Nos. 4,464,381 and 4,906,652. Epoxiconazole is a broad spectrum contact and systemic fungicide used to control powdery mildew, brown and yellow rusts, *Septoria tritici* and *Septoria Nodorum* on Winter and Spring wheat and *Triticale;* powdery mildew, *Rhyncosporium,* net blotch and brown and yellow rust on Winter and Spring barley; powdery mildew, *Rhyncosporium,* net blotch and brown and yellow rust on Rye; and powdery mildew on Oats.

Combinations of agricultural fungicides are typically used to broaden the spectrum of control, to minimize the doses of chemicals used and to reduce the cost of the treatment through additive effect. Combinations of agricultural fungicides can be also used to avoid or delay the risk of resistance development. In some cases, resistance can be overcome by using combinations of fungicide.

U.S. Pat. Nos. 4,464,381 and 4,906,652 further disclose a list of fungicides with which epoxiconazole may be combined, *inter alia,* with folpet, but do not suggest any synergism.

WO2009/071389 discloses synergistic fungicides containing a first ingredient of a general formula encompassing epoxiconazole and a second ingredient from a relatively long list encompassing folpet, without any indication towards this specific combination.

**SUMMARY**

The present invention provides compositions and methods employing combinations of synergistically effective amounts of folpet (I) and epoxiconazole (II).

In certain embodiments, fungicidal combinations are provided, comprising folpet (I) and epoxiconazole (II) in admixture in a synergistically effective amount.

In further embodiments, methods for controlling phytopathogenic fungi are provided, wherein the phytopathogenic fungi, their habitat, plants, soil, or seed to be protected against fungal attack are treated with an effective amount of a combination, for example as admixture, as described above.

In related embodiments, methods for controlling phytopathogenic harmful fungi are provided, wherein one or more of the harmful fungi, their habitat, plants, soil, or seed to be protected are treated simultaneously or sequentially in either order, with a first amount of folpet and a second amount of epoxiconazole; wherein the first and second amounts are synergistically effective.

Also provided herein is the use of the combination of folpet (I) and epoxiconazole (II) as described above for preparing a composition suitable for controlling harmful fungi.

Further embodiments of the present invention provide a fungicidal composition comprising the fungicidal combination as described above and a carrier.

Within still further embodiments, a seed treated with a fungicidal combination as described above is provided.

**DETAILED DESCRIPTION**

The applicant has surprisingly found that a combination treatment based on folpet and epoxiconazole, characterized by different modes of action, exhibits a considerable synergistic effect, allowing a higher fungicidal activity to be obtained than that envisaged on the basis of the activities of each of the fungicides. Such a combination further displays the advantage of having a wider range of use, and allowing the dosages of folpet and epoxiconazole to be reduced, thereby allowing effective control of numerous diseases which can cause damage to plants (or fruits or seeds thereof) of great economic interest.

Representative plants include, for example, vegetable plants, legume plants, cereal plants, fodder plants, grass plants, fiber plants, oil seed plants, field plants, garden plants, greenhouse plants, and houseplants. Cereal plants include, for example, wheat (e.g., durum wheat or common wheat), rice, corn, barley, oats, triticale and rye.

The compositions and methods described herein are distinguished by excellent activity against a broad spectrum of phytopathogenic fungi belonging to the following classes: *Ascomycetes* (e.g. *Venturia, Podosphaera, Erysiphe, Monilinia, Uncinula, Aureobasidium, Sclerophoma*), *Basidiomycetes* (e.g. *Hemileia, Rhizoctonia, Puccinia, Coniophora, Serpula, Poria, Uromyces, Gloeophyllum, Lentinus, Coriolus, Irpex*) and *Fungi imperfecti* (e.g. *Botrytis, Helminthosporium, Rhynchosporium, Fusarium, Septoria, Cercospora, Alternaria, Pyricularia, Penocillium, Geotrichum*).

Such compositions and methods are especially useful for controlling phytopathogenic fungi of cereal plants and their seeds, such as ascomycetous pseudothecial fungus, *Mycosphaerella graminicola* (*Anamorph Septoria tritici*); in certain embodiments such control is achieved using low application rates, such that a minimum total amount of active compounds applied, while retaining sufficient activity against the phytopathogenic fungi.

The active components folpet (I) and epoxiconazole (II) can be applied in admixture, for example in the form of a ready-mixed composition, as a tank mix, or may be applied separately, in any order. In certain embodiments, the compounds I and II are employed in a weight ratio that ranges from 1:1 to 20:1 of folpet (I) to epoxiconazole (II), and in further embodiments, compounds I and II are employed in a weight ratio that ranges from 1:1 to 10:1 of folpet (I) to epoxiconazole (II).

The application rates of the mixture may vary, depending on the effect desired; in particular in agricultural crop areas, such rates may range, for example, from 25 to 2000 grams per hectare (g/ha), from 50 to 1500 g/ha, or from 100 to 1000 g/ha. When the active components are applied separately, the application rates for the compound I typically range from 10 to 1500 g/ha, from 50 to 1500 g/ha, or from 100 to 1000 g/ha; and the application rates for the compound II typically range from 10 to 500 g/ha, from 10 to 300 g/ha, or from 10 to 150 g/ha.

In the treatment of seed, the application rates of the admixture or the separate components generally range from 1 to 1000 g/100 kg of seed, from 1 to 200 g/100 kg of seed, or from 5 to 100 g/100 kg of seed.

In the control of harmful fungi which are pathogenic for plants, in particular cereal plants, the separate or joint application of the compound I and the compound II or of the mixtures of the compound I and the compound II is carried out by any suitable technique known in the art, such as spraying or dusting the seeds, the plants or the soil before or after sowing of the plants, or before or after emergence of the plants.

The invention also provides fungicidal compositions comprising as active components, folpet (I) and epoxiconazole (II) in admixture. Such compositions may comprise, in addition to the aforementioned active components, one or more additional active and/or inactive ingredients. Representative active ingredients include, for example, other microbiocides such as fungicides, insecticides, acaricides, nematicides, herbicides, plant growth regulators, and/or fertilizers. Inactive ingredients included, for example, carriers, surfactants, and other application-promoting adjuvants customarily employed in formulation technology, as well as components that facilitate storage of the composition. Suitable carriers and adjuvants can be solid or liquid and include substances ordinarily employed in formulation technology, e.g. natural or regenerated mineral substances, solvents, dispersants, wetting agents, tackifiers, thickeners, binders or fertilizers.

Compositions may be formulated in any conventional form, such as solutions, emulsions, suspensions, dusts, powders, pastes, granules, or any other technically feasible formulation. The compositions are prepared in known manner, e.g., by homogeneously mixing and/or grinding the active ingredients with extenders, e.g., liquid and solid carriers and, where appropriate, surface-active compounds.

In general, the compositions provided herein comprise from 0.01 to 90% by weight of active agent, from 0.01 to 30% agriculturally acceptable surfactant and 10 to 99.99% solid or liquid formulation inert ingredients and adjuvants. Concentrated forms of compositions generally contain from about 2 and 80%, (e.g., about 10 and 50%) by weight of active agent. Commercial products will preferably be formulated as concentrates; the end user will normally employ diluted formulations.

As noted above, the compositions and methods described herein exhibit a synergistic effect. A synergistic effect exists whenever the action of a combination of active components is greater than the sum of the action of each of the components alone. Therefore, a synergistically effective amount (or an effective amount of a synergistic admixture or combination) of a fungicidal admixture or fungicidal combination is an amount that exhibits greater fungicidal activity than the sum of the fungicidal activities of the individual components.

The Wadley method is well-known method for determining whether synergy exists. In the Wadley method, synergistic activity is determined from dose response curves. With this method, the efficacy of the active ingredient ("a.i.") is determined by comparing the degree of fungal attack on treated plants with that on untreated, similarly inoculated and incubated check plants. Each a.i. is generally tested at multiple. (e.g., 6) concentrations, and dose response curves are generated. The dose response curves are used to establish the EC50 (i.e., the effective concentration of a.i. providing 50% disease control) of the individual compounds as well as of the combinations ($EC50_{observed}$). The experimentally found values of the mixture at a given weight ratio are compared with the values that would have been found were only a complementary efficacy of the components was present (EC50 (A+B) expected). The EC50 (A+B) expected is generally calculated according to Wadley (Levi et al., EPPO-- Bulletin 16, 1986, 651-657) or (Wadley, F.M., U.S. Dep. Agric.,

Agric. Res. Adm., Bur. Entomol. And Plant Quar. ET--223, 1945, 8) as follows:

$$EC50(A+B)_{expected} = (a+b)/[(a/EC50(A)_{observed}) + b/EC50(B)_{observed})]$$

wherein a and b are the weight ratios of the compounds A and B in the mixture and the indexes (A),(B) and (A+B) refer to the observed EC50 values of the compounds A, B or the A+B mixture thereof.

The ratio EC50 (A+B) $_{expected}$/EC50 (A+B) observed expresses the factor of interaction level (R).

The nature of the interaction existing between fungicides used in the combination obtained from the Wadley formula is presented in the following Table 1 (Ulrich Gisi, Phytopathology, 86, 1996, 1273-1279). In the context of the present disclosure, the biological response is generally used to determine a synergistic effect.

Table 1.

| Interaction Level (R) | Mathematical definition | Biological response |
|---|---|---|
| <1.0 | Antagonistic effect | |
| 1.0 | Additive effect | |
| > 1.0 | Synergistic effect | |
| < 0.5 | | Antagonistic effect |
| 0.5-1.5 | | Additive effect |
| >1.5 | | Synergistic effect |

Hereinafter, one or more embodiments of the present invention will be described in detail with reference to the following examples.

EXAMPLES

Efficacy against *Mycosphaerella graminicola*

The strain used in this study is the reference strain Mg Ref1, which is susceptible to QoI (Quinone outside Inhibitors) and DMI (demethylation inhibitor) fungicides.
This strain has been isolated from infected wheat leaves in the United Kingdom.

Inoculum preparation of *Mycosphaerella graminicola*

Pycnospores of this *M. graminicola* strain are transferred with a sterile spatula to Maly-Yeast Extract-Agar medium ("MYE") and incubated at 19°C in darkness. After 10 days of incubation, pycnospores of this strain of *M. graminicola* strain are scraped with a sterile scalpel at the surface of the MYE medium and transferred to a 1.5 ml Eppendorf tube containing 1 ml of 2 times concentrated Glucose-Bacto Peptone (2x GBP) liquid medium. The pycnospores suspension of this strain is adjusted to $2x10^4$ spores/ml in 2x GBP liquid medium.

*In* vitro evaluation of the sensitivity level of *M. graminicola* strains towards epoxiconazole and folpet used alone or in admixture

Bacto-Peptone-Glucose liquid medium ("BPG") was autoclaved for 30 minutes at 120°C, then allowed to settle at room temperature. Folpet, epoxiconazole, or a mixture of epoxiconazole and folpet at each of the following weight ratios (epoxiconazole to folpet), were added to sterile distilled water: 1:10, 1:7.5 and 1:1. The amounts of each component are shown in the table below. The total final concentration of active ingredient (i.e., the sum of the active ingredient concentrations) was: 0, 0.00256, 0.0128, 0.064, 0.32, 1.6, 8.0, or 40 μg a.i./ml. After homogenization, 100 μl of each solution was added to a well of a 96-well microtitre plate, with sterile distilled water without fungicide used as the control. Then, each well was seeded with 100 μl of the pycnospores suspension ($2x10^4$ pycnospores/ml) prepared in 2x BPG liquid medium. For each fungicide ratio and concentration tested, 6 replicates were tested (6 rows per strain). The microtitre plates were then incubated in the dark at 19°C for 7 days.
The degree of mycelial growth in the liquid medium was assessed by measuring the optical density of the wells containing the spore suspensions and fungicide concentrations. The measurements were made at 0 and 7 days using a Biotek plate reader at a wavelength of 405 nm, and the XLStat-Dose software (Addinsoft) was used to capture and process the data. Then, the mean as well as the lower and higher 95 % limit of confidence $EC_{50}$ values of the *M. graminicola* strain Mg Ref 1 response to each fungicide (used alone or in a mixture) were determined.

The dose response curves were used to establish the EC50. The fungicide interactions in the mixture were calculated according to Wadley (as discussed above). The results are presented in the following Table 2.

Table 2. Sensitivity behaviour ($EC_{50}$ µg a.i./ml) of the strain Mg Ref 1 of *M. graminicola* towards Epoxiconazole and Folpet used alone and in mixture.

| Epoxiconazole (µg/mL) | Folpet (µg/mL) | Ratio | $EC50_{(OB)}$ | $EC50_{(EX)}$ | R (interaction level) |
|---|---|---|---|---|---|
|  | 0 |  | 0.01 |  |  |
| 0 |  |  | 2.39 |  |  |
| 50 | 500 | 1:10 | 0.08 | 0.14 | 1.76 |
| 25 | 250 | 1:10 | 0.12 | 0.14 | 1.14 |
| 12.5 | 125 | 1:10 | 0.08 | 0.14 | 1.61 |
| 50 | 375 | 1:7.5 | 0.09 | 0.11 | 1.19 |
| 25 | 188 | 1:7.5 | 0.09 | 0.11 | 1.19 |
| 12.5 | 94 | 1:7.5 | 0.08 | 0.11 | 1.42 |
| 50 | 50 | 1:1 | 0.02 | 0.03 | 1.29 |
| 25 | 25 | 1:1 | 0.02 | 0.03 | 1.18 |

These results demonstrate that epoxiconazole and folpet, in the various concentrations and weight ratios indicated above, exhibit a synergistic effect against *M. graminicola.*

## Claims

1. A fungicidal composition comprising folpet (I) and epoxiconazole (II) in a synergistically effective amount.

2. The fungicidal composition according to claim 1, wherein the weight ratio of folpet (I) to epoxiconazole (II) is from 1:1 to 10:1.

3. A method for controlling phytopathogenic fungi, wherein the fungi, their habitat, plants, soil, or seed to be protected against fungal attack are treated with an effective amount of the fungicidal composition according to claim 1.

4. The method according to claim 3, wherein the phytopathogenic fungi Mycosphaerella graminicola is controlled.

5. The method according to claim 3, wherein the folpet (I) and epoxiconazole (II) of the fungicidal composition according to claim 1 are applied as an admixture or separately.

6. The method according to claim 5, wherein folpet (I) and epoxiconazole (II) of the fungicidal composition according to claim 1 are applied as a ready-mixed admixture composition or as a tank admixture.

7. The method according to claim 3, wherein the fungicidal composition, comprising folpet (I) and epoxiconazole (II) according to claim 1 are applied as an admixture in an amount from 25 g/ha to 2000 g/ha.

8. The method according to claim 3, wherein the fungicidal composition comprising folpet (I) and epoxiconazole (II) according to claim 1 are applied separately, in either order, in an amount from 10 to 1500 g/ha of folpet (I), from 10 to 500 g/ha of epoxiconazole II.

9. The method according to claim 3, wherein the fungicidal composition of folpet (I) and epoxiconazole (II) according to claim 1 are applied in an amount of from 1 g to 1000 g per 100 kg of seed, either separately or as an admixture.

10. The use of the composition of folpet (I) and epoxiconazole (II) according to claim 1 for preparing a composition suitable for controlling harmful fungi, wherein the folpet (I) and epoxiconazole (II) are in admixture.

11. A fungicidal composition comprising the composition of folpet (I) and epoxiconazole (II) according to claim 1 in admixture, and a carrier.

12. A seed comprising the composition of folpet (I) and epoxiconazole (II) according to claim 1.

13. A seed according to claim 12 comprising a composition of an admixture of folpet (I) and a carrier and an admixture of epoxiconazole (II) and a carrier.

14. A method for controlling phytopathogenic fungi, wherein one or more of the harmful fungi, its habitat, plants, soil, or seed to be protected are treated simultaneously or sequentially in either order, with a first amount of folpet; and a second amount of epoxiconazole; wherein the first and second amounts are synergistically effective.

**Patentansprüche**

1. Eine fungizide Zusammensetzung umfassend Folpet (I) und Epoxiconazol (II) in einer synergistisch wirksamen Menge.

2. Die fungizide Zusammensetzung gemäß Anspruch 1, worin das Gewichtsverhältnis von Folpet (I) zu Epoxiconazol (II) von 1:1 bis 10:1 beträgt.

3. Ein Verfahren zur Kontrolle phytopathogener Pilze, worin die Pilze, ihr Lebensraum, die Pflanzen, der Boden oder das vor Pilzbefall zu schützende Saatgut mit einer wirksamen Menge der fungiziden Zusammensetzung gemäß Anspruch 1 behandelt werden.

4. Das Verfahren gemäß Anspruch 3, worin der phytopathogene Pilz Mycosphaerella graminicola kontrolliert wird.

5. Das Verfahren gemäß Anspruch 3, worin das Folpet (I) und Epoxiconazol (II) der fungiziden Zusammensetzung gemäß Anspruch 1 als Beimischung oder separat angewendet werden.

6. Das Verfahren gemäß Anspruch 5, worin Folpet (I) und Epoxiconazol (II) der fungiziden Zusammensetzung gemäß Anspruch 1 als fertig-gemischte Beimischungs-Zusammensetzung oder als eine Tank-Beimischung angewendet werden.

7. Das Verfahren gemäß Anspruch 3, worin die fungizide Zusammensetzung, umfassend Folpet (I) und Epoxiconazol (II) gemäß Anspruch 1, als eine Beimischung in einer Menge von 25 g/ha bis 2000 g/ha angewendet wird.

8. Das Verfahren gemäß Anspruch 3, worin die fungizide Zusammensetzung, umfassend Folpet (I) und Epoxiconazol (II) gemäß Anspruch 1, separat, in beliebiger Reihenfolge, in einer Menge von 10 bis 1500 g/ha Folpet (I), von 10 bis 500 g/ha Epoxiconazol II, angewendet wird.

9. Das Verfahren gemäß Anspruch 3, worin die fungizide Zusammensetzung aus Folpet (I) und Epoxiconazol (II) gemäß Anspruch 1 in einer Menge von 1 g bis 1000 g pro 100 kg Saatgut angewendet wird, entweder separat oder als eine Beimischung.

10. Die Verwendung der Zusammensetzung aus Folpet (I) und Epoxiconazol (II) gemäß Anspruch 1 zur Herstellung einer Zusammensetzung, die geeignet ist zur Kontrolle schädlicher Pilze, worin das Folpet (I) und Epoxiconazol (II) in Beimischung vorliegen.

11. Eine fungizide Zusammensetzung umfassend die Zusammensetzung aus Folpet (I) und Epoxiconazol (II) gemäß Anspruch 1 in Beimischung und einen Träger.

12. Ein Saatgut, das die Zusammensetzung aus Folpet (I) und Epoxiconazol (II) gemäß Anspruch 1 umfasst.

13. Ein Saatgut gemäß Anspruch 12, das eine Zusammensetzung aus einer Beimischung aus Folpet (I) und einem Träger und einer Beimischung aus Epoxiconazol (II) und einem Träger umfasst.

14. Ein Verfahren zur Kontrolle phytopathogener Pilze, worin einer oder mehrere der schädlichen Pilze, ihres Lebensraumes, der Pflanzen, des Bodens oder des zu schützenden Saatguts gleichzeitig oder nacheinander in beliebiger Reihenfolge mit einer ersten Menge an Folpet; und einer zweiten Menge an Epoxiconazol; behandelt werden, worin die erste und die zweite Menge synergistisch wirksam sind.

**Revendications**

1. Composition fongicide comprenant du folpet (I) et de l'époxiconazole (II) en une quantité synergiquement efficace.

2. Composition fongicide selon la revendication 1, dans laquelle le rapport pondéral du folpet (I) à l'époxiconazole (II) est de 1/1 à 10/1.

3. Procédé de lutte contre les champignons phytopathogènes, dans lequel les champignons, leur habitat, les plantes, le sol ou la semence à protéger contre une attaque fongique sont traités par une quantité efficace de la composition fongicide selon la revendication 1.

4. Procédé selon la revendication 3, dans lequel on lutte contre les champignons phytopathogènes Mycosphaerella graminicola.

5. Procédé selon la revendication 3, dans lequel le folpet (I) et l'époxiconazole (II) de la composition fongicide selon la revendication 1 sont appliqués sous forme de mélange ou séparément.

6. Procédé selon la revendication 5, dans lequel le folpet (I) et l'époxiconazole (II) de la composition fongicide selon la revendication 1 sont appliqués sous la forme d'une composition prête à mélanger ou sous la forme d'un mélange en cuve.

7. Procédé selon la revendication 3, dans lequel la composition fongicide, comprenant du folpet (I) et de l'époxiconazole (II) selon la revendication 1, est appliquée sous forme de mélange en une quantité de 25 g/ha à 2 000 g/ha.

8. Procédé selon la revendication 3, dans lequel la composition fongicide comprenant du folpet (I) et de l'époxiconazole (II) selon la revendication 1 est appliquée séparément, dans n'importe quel ordre, en une quantité de 10 à 1 500 g/ha de folpet (I), de 10 à 500 g/ha d'époxiconazole II.

9. Procédé selon la revendication 3, dans lequel la composition fongicide de folpet (I) et d'époxiconazole (II) selon la revendication 1 est appliquée en une quantité de 1 g à 1 000 g pour 100 kg de semence, soit séparément soit sous forme de mélange.

10. Utilisation de la composition de folpet (I) et d'époxiconazole (II) selon la revendication 1 pour la préparation d'une composition adaptée à la lutte contre les champignons nuisibles, dans laquelle le folpet (I) et l'époxiconazole (II) sont sous forme de mélange.

11. Composition fongicide comprenant la composition de folpet (I) et d'époxiconazole (II) selon la revendication 1 en mélange, et un support.

12. Semence comprenant la composition de folpet (I) et d'époxiconazole (II) selon la revendication 1.

13. Semence selon la revendication 12 comprenant une composition d'un mélange de folpet (I) et d'un support et d'un mélange d'époxiconazole (II) et d'un support.

14. Procédé de lutte contre les champignons phytopathogènes, dans lequel un ou plusieurs des champignons nuisibles, leur habitat, les plantes, le sol ou la semence à protéger sont traités simultanément ou successivement dans n'importe quel ordre, par une première quantité de folpet ; et une deuxième quantité d'époxiconazole ; dans lequel la première et la deuxième quantité sont synergiquement efficaces.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 2553770 A
- US 2553771 A
- US 2553776 A
- US 4464381 A
- US 4906652 A
- WO 2009071389 A

## Non-patent literature cited in the description

- **LEVI et al.** *EPPO-- Bulletin,* 1986, vol. 16, 651-657
- **WADLEY, F.M.** U.S. Dep. Agric., Agric. Res. Adm. *Bur. Entomol. And Plant Quar. ET--223,* 1945, 8
- **ULRICH GISI.** *Phytopathology,* 1996, vol. 86, 1273-1279